# EUROPEAN PATENT APPLICATION

(11) **EP 1 508 991 A1**
(43) Date of publication of application: **23.02.2005**
(21) Application number: 02733243.6
(22) Date of filing: 29.05.2002
(51) Int. Cl.: H04L 1/16, H04Q 7/38, H04B 7/26

(54) **DATA ERROR CONTROL METHOD**

(71) Applicant: MITSUBISHI DENKI KABUSHIKI KAISHA, Tokyo 100-8310 (JP)
(72) Inventor: UGA, Shinsuke, Mitsubishi Denki Kabushiki Kaisha, Chiyoda-ku, Tokyo 100-8310 (JP)
(74) Representative: Popp, Eugen, Dr.
(86) International application number: PCT/JP2002/005211
(87) International publication number: WO 2003/101030

(57) **Abstract**

A data error control method for data passing through error correction encoding. It has a radio frame including fields for storing the data, a data number associated with said data and a retransmission request data number. It receives the radio frame from a data transmitting end. If an error is detected as a result of decoding the data received, it stores the data number associated with said data into the field of the radio frame as the retransmission request data number, and transmits the radio frame to the data transmitting end. It receives the retransmission data associated with the data number from the data transmitting end. It can speed up the retransmission control and reduce the processing load of the network.

## Description

### TECHNICAL FIELD

The present invention relates to a communication system using a CDMA communication scheme, and particularly to an error control method using both error correction encoding and automatic repeat request.

### BACKGROUND ART

Conventional communication systems perform error control such as error correction encoding (Forward Error Correction: FEC) and automatic repeat request (Automatic Repeat Request: ARQ) to improve transmission quality.

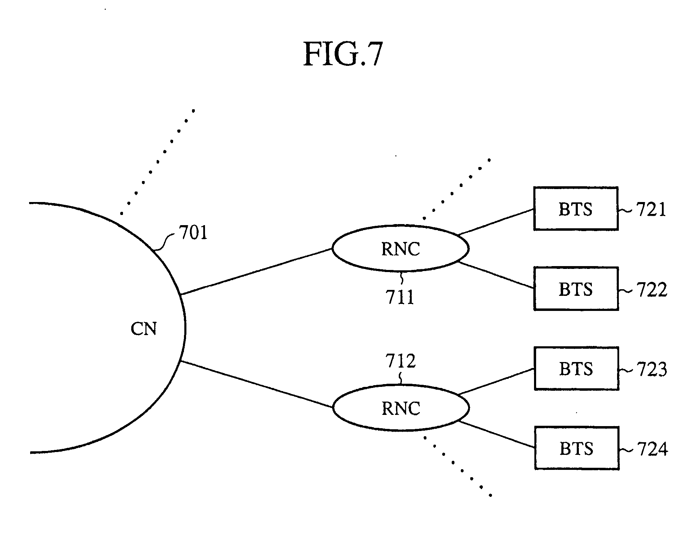

Fig. 7 is a block diagram showing a configuration of a radio network including a conventional communication system. In Fig. 7, the reference numeral 701 designates a core network for carrying out call control, service control and the like of the entire system. Reference numerals 711 and 712 each designate a radio access network controller (RNC) for managing radio resources, controlling base stations (BTS) and the like. Reference numerals 721 and 722 each designate a base station (BTS) controlled by the radio access network controller 711, and 723 and 724 each designate a base station (BTS) controlled by the radio access network controller 712. The base stations communicate with radio communication terminals not shown.

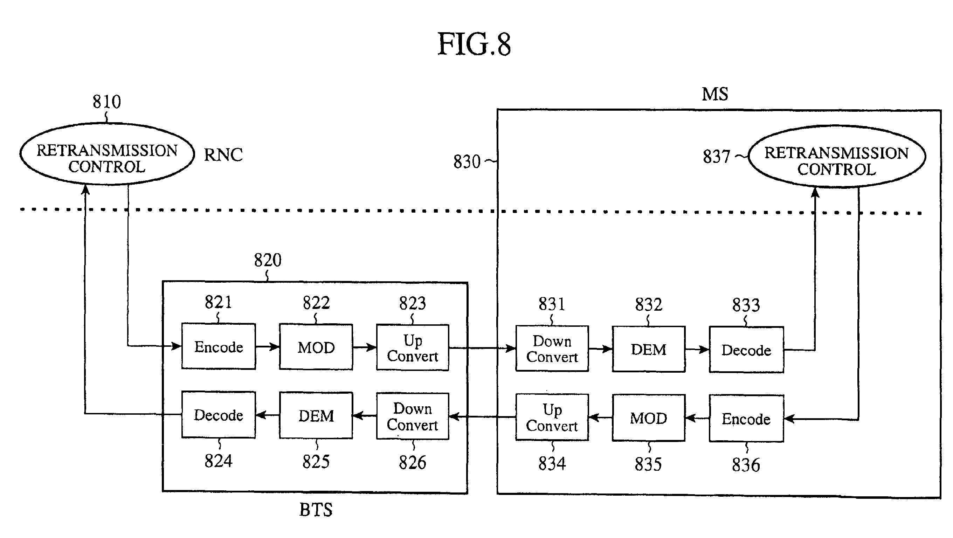

Fig. 8 is a functional block diagram showing a signal flow and error control from the radio access network controllers 711 and 712 as shown in Fig. 7 to the side of a radio communication terminal. Referring to Fig. 8, data transmission from a radio access network controller 810 on the radio network side to a radio communication terminal 830 will be described. First, the radio access network controller 810 transmits data to a base station 820. The base station 820 carries out error correction encoding 821, baseband modulation 822 of received data, and up-conversion 823 of the signal modulated by the data, and transmits it to the radio communication terminal 830 as a signal in the radio frequency band.

The radio communication terminal 830 receives the radio frequency signal from the base station 820 via an antenna. Then, it performs down-conversion 831, baseband demodulation 832 and error correction decoding 833 of the received signal, andnotifies an upper layer 837 of the received data. If the data to be sent does not come, the upper layer 837 generates retransmission request data and transmits it (retransmission control).

When transmitting the data (retransmission request data) from the radio communication terminal 830 to the radio access network controller 810, the radio communication terminal 830 performs error correction encoding 836, baseband modulation 835 of the data received from the upper layer 837, and up-conversion 834 of the signal modulated by the data, and transmits it to the base station 820 as a radio frequency signal. Receiving the radio frequency signal, the base station 820 carries out down-conversion 826, baseband demodulation 825 and error correction decoding 824 of the received signal, and transmits the received data to the radio access network controller 810. Deciding that the data is the retransmission request data, the radio access network controller 810 retransmits the requested data (retransmission control).

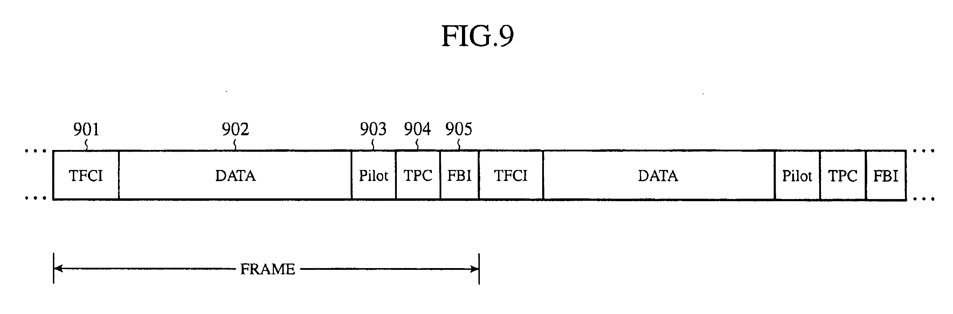

Fig. 9 illustrates a format of a radio frame exchanged between the base station 820 and radio communication terminal 830. In Fig. 9, the reference numeral 901 designates a TFCI (Transport Format Combination Indicator) that indicates the number of multiplexing of transport channels in the radio frame, and a transport format used by each transport channel. The reference numeral 902 designates data, 903 designates pilot bits (Pilot), a known pattern used for the channel estimation in coherent detection, 904 designates a transmit power control (TPC) command, and 905 designates feedback information (FBI).

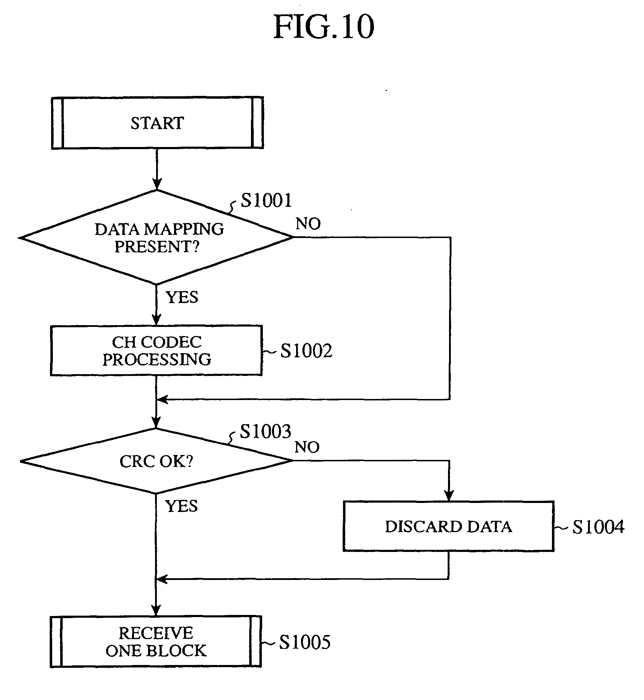

In the communication system described with reference to Fig. 8, if a data error occurs on a transmission path and the error is detected even after the error correction decoding in the receiver, the received data is discarded in accordance with the algorithm as illustrated in Fig. 10. In this case, the radio communication terminal 830 does not send the received data to the upper layer 837, and the base station 820 does not send the received data to the radio access network controller 810.

Detailed operation of the error correction decoding 833 will be describe with reference to Fig. 10. At step S1001, the error correction decoding 833 decides the presence or absence of the data (data mapping) from data mapping information such as TFCI of the received radio frame. If the presence of the data is confirmed, the error correction decoding 833 carries out error correction decoding (channel codec) (step S1002). Unless the presence of the data is confirmed, the error correction decoding 833 does not perform the error correction decoding. Subsequently, the error correction decoding 833 performs error detection (step S1003) . If it decides that the error is present as a result of the error detection (CRC result), the error correction decoding 833 proceeds to step S1004 to discard the data. If the error is not detected at the error decision, the data is sent to the upper layer. Then, the error correction decoding 833 receives the next block at step S1005.

If the data is discarded as described above, the upper layer checks that it does not receive the data by counting a specified time period during which the data to be sent does not come. Then, the upper layer produces a retransmission request message for the radio network, and transmits it to the radio network via the base station (automatic repeat request). Receiving the retransmission request message, the radio access network controller 810 carries out control so that it retransmits the data (packet) requested.

In this way, in the conventional communication system, although the error correction decoding of the packet is performed in the physical layer, the retransmission request is carried out by only the retransmission request process based on a message in the upper layer. Thus, once the retransmission takes place, the sequence in the upper level is requested. As a result, the processing takes a lot of time, which presents a problem of increasing the retransmission delay of the packet, reducing the message sequence rate, and increasing the load of the communication control.

As an alternative error control scheme, a method is known that links the error correction encoding with the automatic repeat request, stores soft decision information about the packet in which the error is detected in a receiving buffer, and combines the packet with the retransmission packet in each symbol (packet combining). In this case, a desired signal-to-interfering power ratio (SINR) is expected to be improved. However, when the retransmission delay of the packet is large, the error-detected packet must be stored in the receiving buffer for an increasing time period, which presents a problem of demanding a very large amount of memory capacity.

In addition, as a conventional method of accelerating the retransmission request and reducing the retransmission delay, an ARQ communication method disclosed in Japanese patent application laid open No. 11-186994/1999 is known. It checks the continuity of sequential numbers received along with data, and if discontinuity occurs, it discards the data and sends a retransmission request. Thus, the technique carries out the retransmission control based on the continuity of the "sequential number". Accordingly, it adds to retransmission data the "sequential numbers" corresponding to the sequence of the retransmission, and these numbers differ from the "sequential numbers" of the initially received data. Consequently, it cannot identify the data corresponding to the retransmission data in the physical layer. Thus, the method has a problem in that it is not suitable for the technique such as the foregoing packet combining that carries out the decoding using both the initially received data and retransmission data to improve the receiving characteristics.

### DISCLOSURE OF THE INVENTION

According to a first aspect of the present invention, there is provided a data error control method of data passing through error correction encoding, the data error control method comprising: a receiving step of receiving from a data transmitting end a radio frame including fields for storing the data, a data number associated with the data and a retransmission request data number; an extracting step of extracting the data and the data number from the fields of the radio frame received; a transmitting step of transmitting, if an error is detected as a result of decoding the data extracted, a radio frame to the data transmitting end after storing the data number associated with the data into the field of the radio frame as the retransmission request data number; and a re-receiving step of receiving retransmission data associated with the data number from the data transmitting end. Thus, it can speed up the retransmission control and reduce the processing load of the network.

The data error control methodmay further include: a storing step of storing, if an error is detected as a result of decoding the data extracted, the data into a receiving buffer along with the data number associated with the data; a retrieving step of retrieving the data stored along with a same data number as the data number from the receiving buffer according to the data number associated with the retransmission data received in the re-receiving step; and a combining step of combining the retrieved data with the retransmission data. Thus, it can improve the receiving performance, and reduce the storing time period of the data in the receiving buffer, thereby being able to reduce the memory capacity of the receiving buffer.

The radio frame may further include a field for storing retransmission information associated with the data; and the retrieving step may carry out the retrieval only when a decision is made from the retransmission information that the data is the retransmission data. Thus, it can further speed up the retransmission control.

The data number may be stored and transmitted in a radio frame a prescribed number of frames previous to the radio frame storing the data associated with the data number. Thus, it can further speed up the retransmission control.

One of the data number and the retransmission request data number may be subjected to error correction encoding. Thus it can protect the retransmission control information and improve the receiving performance.

One of the data number and the retransmission request data number may be provided with an error detection code. Thus it can detect the error of the retransmission control information explicitly, and hence improve the receiving performance.

The data number may be uniquely assigned to data of each error correction encoding unit of the data. Thus it can simplify the processing and the configuration of the system.

According to a second aspect of the present invention, there is provided a data error control method of data passing through error correction encoding, the data error control method comprising: a storing step of storing data to be transmitted into a transmission buffer along with a data number associated with the data; a transmitting step of storing the data and the data number into a radio frame including fields for storing the data, the data number associated with the data and a retransmission request data number, and of transmitting the radio frame to a data receiving end; an extracting step of extracting the retransmission request data number from the fields of the radio frame received from the data receiving end; and a retransmission step of retrieving data, which is stored along with a same data number as the retransmission request data number, from the transmission buffer according to the retransmission request data number, and of retransmitting the data retrieved. Thus, it can speed up the retransmission control and reduce the processing load of the network.

The data to be retransmitted at the retransmission step may be stored and transmitted in a radio frame a prescribed number of frames after the radio frame storing the retransmission request data number. Thus, it can further speed up the retransmission control.

One of the data number and the retransmission request data number may be subjected to error correction encoding. Thus it can protect the retransmission control information and improve the receiving performance.

One of the data number and the retransmission request data number may be provided with an error detection code. Thus it can detect the error of the retransmission control information explicitly, and hence improve the receiving performance.

The data number may be uniquely assigned to data of each error correction encoding unit of the data. Thus it can simplify the processing and the configuration of the system.

### BRIEF DESCRIPTION OF THE DRAWINGS

Fig. 1 is a functional block diagram showing a communication system of an embodiment in accordance with the present invention;
Fig. 2 is a functional block diagram showing a radio communication terminal of the embodiment in accordance with the present invention;
Fig. 3 is a detailed functional block diagram showing part of the radio communication terminal of the embodiment in accordance with the present invention;
Fig. 4 is a format diagram illustrating a radio frame used in the communication system of the embodiment in accordance with the present invention;
Fig. 5 is a flowchart illustrating an error control procedure at a data receiving end of the embodiment in accordance with the present invention;
Fig. 6 is a flowchart illustrating an error control procedure at a data transmitting end of the embodiment in accordance with the present invention;
Fig. 7 is a block diagram showing a configuration of a radio network including a conventional communication system;
Fig. 8 is a functional block diagram showing the conventional communication system;
Fig. 9 is a format diagram illustrating a radio frame used by the conventional communication system; and
Fig. 10 is a flowchart illustrating receiving error control in a conventional radio communication terminal.

### BEST MODE OF CARRYING OUT THE INVENTION

The preferred embodiment for carrying out the present invention will now be described with reference to the accompanying drawings to explain the invention in more detail.

### FIRST EMBODIMENT

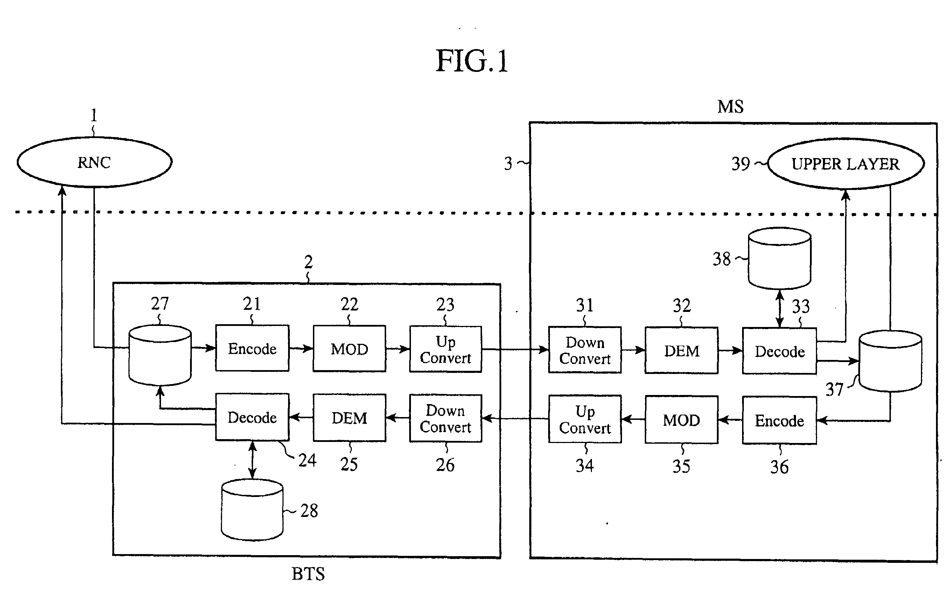

Fig. 1 is a functional block diagram showing a communication system of an embodiment in accordance with the present invention. In Fig. 1, the reference numeral 1 designates a radio access network controller, 2 designates a base station, and 3 designates a radio communication terminal. The functional blocks of the base station 2 and radio communication terminal 3 each indicate functions in the physical layer except for an upper layer 39.

In the base station 2, the reference numeral 27 designates a transmission data buffer installed in the physical layer for storing data received from the radio access network controller 1 and transmitted to the radio communication terminal 3, and for storing sequence numbers, that is, data numbers associated with the data. If a decoder 24 makes a decision that a retransmission request is present from the information in a received retransmission request field (which will be described later) , the data corresponding to the sequence number is retrieved from the transmission data buffer 27, and retransmitted. The reference numeral 21 designates an encoder for carrying out error correction encoding of the data to be transmitted, 22 designates a baseband modulator for performing baseband modulation and 23 designates an up-converter for up-converting the modulated signal to a radio frequency band. The transmission data passes through these functional blocks, and is transmitted to the radio communication terminal 3.

The reference numeral 26 designates a down-converter for down-converting a radio frequency signal received from the radio communication terminal 3, 25 designates a baseband demodulator for performing baseband demodulation, and 24 designates a decoder for carrying out error correction decoding, error detection and retransmission control. The reference numeral 28 designates a received error data buffer for storing data in which error is detected by the decoder 24 (soft decision information symbols before error correction), along with the sequence numbers associated with the data. The data in which the decoder 24 does not detect any error is transmitted to the radio access network controller 1.

In the radio communication terminal 3, the reference numeral 31 designates a down-converter for down-converting a radio frequency signal received from the base station 2, 32 designates a baseband demodulator for performing baseband demodulation, and 33 designates a decoder for carrying out error correction decoding, error detection and retransmission control. The reference numeral 38 designates a received error data buffer for storing data in which error is detected by the decoder 33 (soft decision information), along with the sequence numbers associated with the data. The data in which the decoder 33 does not detect any error is sent to the upper layer 39.

The reference numeral 37 designates a transmission data buffer installed in the physical layer for storing data to be transmitted to the base station 2 and the sequence numbers associated with the data. If the decoder 33 makes a decision that a retransmission request is present from the information in a received retransmission request field (which will be described later) , the corresponding data is retrieved from the transmission data buffer 37 in accordance with the sequence number, and retransmitted. The reference numeral 36 designates an encoder for carrying out error correction encoding of the data to be transmitted, 35 designates a baseband modulator for performing baseband modulation and 34 designates an up-converter for up-converting the modulated signal to the radio frequency band. The radio frequency signal is transmitted to the base station 2.

As described above, in the communication system of Fig. 1, both the base station 2 and radio communication terminal 3 have a function to become a data transmitting end and data receiving end, and carry out the retransmission control.

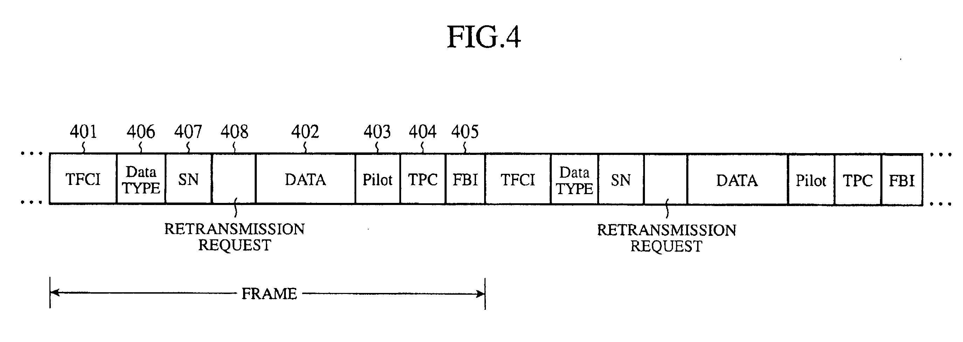

Fig. 4 is a format diagram of a radio frame contained in a physical channel exchanged between the base station 2 and radio communication terminal 3. In Fig. 4, the reference numeral 401 designates a TFCI (Transport Format Combination Indicator) which indicates the number of multiplexing of transport channels in the radio frame, and a transport format used by each transport channel. The reference numeral 402 designates data, 403 designates pilot bits (Pilot), a known pattern used for channel estimation in the coherent detection, 404 designates a transmit power control (TPC) command, and 405 designates feedback information (FBI). They are also contained in the conventional radio frame and have the same functions.

Reference numerals 406, 407 and 408 each designate a field provided for performing the error correction encoding (Forward Error Correction: FEC) and automatic repeat request (ARQ) in the same layer (physical layer) in the present invention. More specifically, the reference numeral 406 designates a data type field (data type information), which indicates retransmission information about the distinction between the data to be initially transmitted and the retransmission data, and about what number retransmission data in the case of the retransmission data. The reference number 407 designates a sequence number field (sequence number) for storing a sequence number, a data number uniquely determined for the data in each data processing unit. Since the sequence number is associated with the data itself, the data to be initially transmitted and the corresponding retransmission data have the same number. The reference numeral 408 designates a retransmission request field (retransmission request information) for storing a flag indicating a retransmission request and the sequence number (retransmission request data number) associated with the data to be retransmitted. The data (information) stored in these fields are provided with the error correction encoding and error detection code. In addition, it is assumed that the information items in the data type field 406 and sequence number field 407 are mapped onto a radio frame on which the data 402 associated with them is mapped, or onto a radio frame which is transmitted a prescribed number of frames previous to that radio frame.

Assigning the sequence number 407 to each data processing unit as described above makes it possible to carry out both the error correcting control and retransmission control in terms of the same data unit, thereby simplifying the processing and the configuration of an actual apparatus. In addition, receiving the data type information 406 and sequence number 407 associated with the data 402 at the radio frame a prescribed number of frames previous to the radio frame onto which the data 402 is mapped makes it possible to perform a retransmission request more quickly by using the data type information 406 and sequence number 407 which have been determined already, if an error causedby a failure on the transmission path or the like is detected in the data 402.

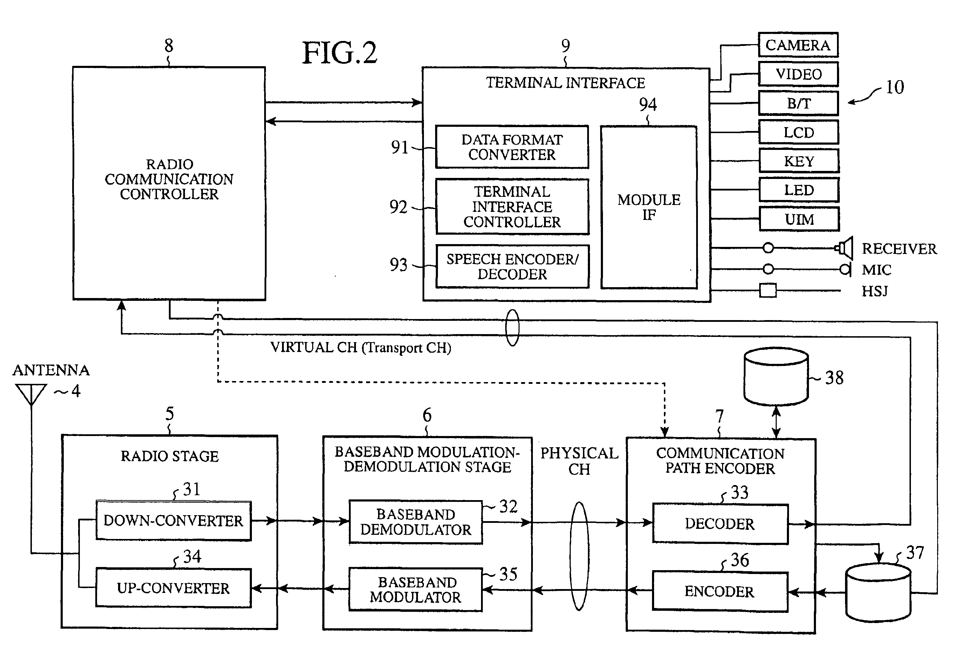

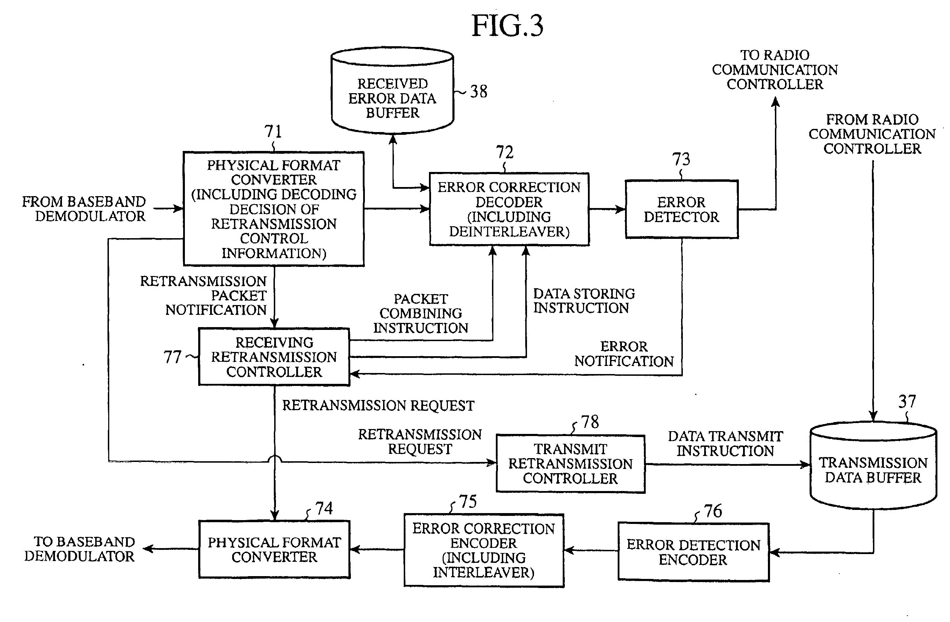

Next, referring to Figs. 2 and 3, functions of the radio communication terminal 3 in the communication system of Fig. 1 will be described in detail. Fig. 2 is a functional block diagram of the entire radio communication terminal 3, in which the same reference numerals designate the same components as those of Fig. 1. In Fig. 2, the reference numeral 4 designates an antenna for exchanging a radio frequency signal with the base station 2, 5 designates a radio stage including a down-converter 31 and an up-converter 34, and 6 designates a baseband modulation-demodulation stage including a baseband demodulator 32 and a baseband modulator 35.

The reference numeral 7 designates a communication path encoder including a decoder 33 and an encoder 36. It accesses a received error data buffer 38 and a transmission data buffer 37 to carry out error control in accordance with the present invention, the details of which will be described later with reference to Fig. 3.

The reference numeral 8 designates a radio communication controller for performing protocol control of the radio communication, for controlling the radio stage 5, baseband modulation-demodulation stage 6 and communication path decoder 7, and for communicating with a terminal interface 9. The terminal interface 9, which has interface functions with user interface modules 10 such as a camera, video, LCD and operation section, includes a data format converter 91, a terminal interface controller 92, a speech encoder/decoder 93, and individual module interfaces 94.

Next, referring to Fig. 3, the communication path encoder 7, received error data buffer 38 and transmission data buffer 37, which have the main functions of the present invention, will be described. In the communication path encoder 7, according to its functions, the decoder 33 is further subdivided into a physical format converter 71, an error correction decoder 72, an error detector 73 and a receiving retransmission controller 77. Likewise, the encoder 36 is subdivided into an error detection encoder 76, an error correction encoder 75, a physical format converter 74 and a transmit retransmission controller 78.

First, the individual functional blocks included in the decoder 33 will be described. The physical format converter 71 multiplexes or demultiplexes a received physical channel, maps the data in the radio frame onto a transport channel, and carries out decoding decision of the retransmission control information, which includes the data type information 406, sequence number 407 and retransmission request information 408, and of the TFCI 401, which are separated from the data. If a decision is made from the data type information 406 that the data associated with it is the retransmission data, the physical format converter 71 notifies the receiving retransmission controller 77 of the information along with the sequence number 407. In addition, if it makes a decision that the retransmission request information 408 indicates the retransmission request and the sequence number associated with the corresponding data, the physical format converter 71 identifies the data (packet) to be retransmitted from the sequence number, and notifies the transmit retransmission controller 78 of the data.

The receiving retransmission controller 77 performs control of the individual blocks in accordance with the retransmission control information delivered from the physical format converter 71 and error detector 73 which will be described later. When notified by the physical format converter 71 that the received data is the retransmission data, the receiving retransmission controller 77 supplies the error correction decoder 72 with a control signal instructing the packet combining of the data corresponding to the sequence number 407. In contrast, if notified by the error detector 73 that an error is detected in the received data, the receiving retransmission controller 77 instructs the error correction decoder 72 to store the data in the received error data buffer 38, and supplies are transmission request to the physical format converter 74 on the transmit side which will be described later.

The error correction decoder 72 carries out the error correction decoding of the received data. When it receives the control signal instructing the packet combining from the receiving retransmission controller 77, the error correction decoder 72 retrieves the data stored in the received error data buffer 38 along with the corresponding sequence number, performs the packet combining of the received data with the retrieved data, and carries out decoding processing. In contrast, when it receives the control signal instructing to store the data, the error correction decoder 72 stores the received data into the received error data buffer 38 along with the sequence number 407 associated with the data. The data to be stored here is the data before decoding (soft decision information).

The error detector 73 performs the error detection of the data after the error correction. If an error is detected in the data, the error detector 73 notifies the receiving retransmission controller 77 that the error is detected in the data. Unless the error is detected, the data is transmitted to the radio communication controller 8.

Next, the individual functional blocks included in the encoder 36 will be described. According to the retransmission request fed from the physical format converter 71, the transmit retransmission controller 78 notifies the transmission data buffer 37 of the sequence number, and instructs it to transmit the data number associated with the data. The error detection encoder 76 adds the error detection code to the data on the transport channel transmitted from the upper layer, or to the retransmission data output from the transmission data buffer 37 under the control of the transmit retransmission controller 78. The error correction encoder 75 carries out the error correction encoding of the data to which the error detection code is added.

The physical format converter 74 multiplexes a plurality of transport channels, and maps them onto the physical channel along with the retransmission control information such as the data type information 406, sequence number 407 andretransmission request information 408. When receiving the retransmission request from the receiving retransmission controller 77, the physical format converter 74 stores a retransmission request in the retransmission request field 408 associated with the data to be retransmitted and the sequence number 407 associated with the retransmission data. In addition, the physical format converter 74 adds the error detection code to the retransmission control information (data type information 406, sequence number 407 and retransmission request information 408) to be mapped, followed by error correction encoding. This makes it possible to protect the important control data for the data, thereby improving the receiving performance of the data.

Although the functions of the decoder 33 and encoder 36 of the radio communication terminal 3 are described in detail, the decoder 24 and encoder 21 of the base station 2 have similar error control functions and carry out the error control.

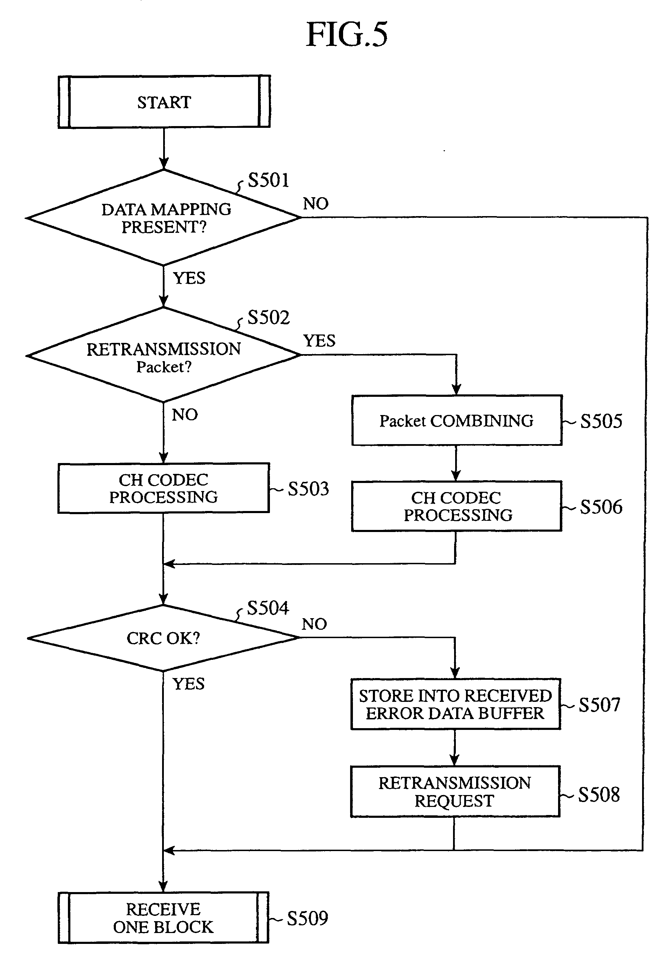

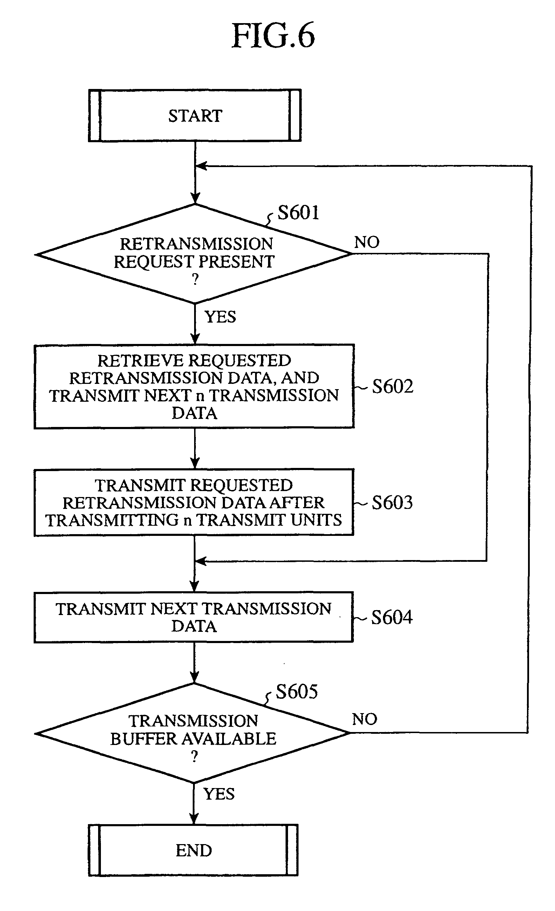

Referring to Figs. 5 and 6, the operation of the error control processing of the foregoing decoder, encoder and the like will be described. Fig. 5 is a flowchart illustrating an error control procedure of a data receiving end that receives the data and makes a retransmission request. First, receiving the data, the physical format converter 71 makes a decision as to the presence or absence of the data (data mapping) from the data mapping information such as the TFCI 401 (step S501). Unless the presence of the data is confirmed here, the physical format converter 71 receives the next block (step S509). In contrast, when the presence of the data is confirmed, the physical format converter 71 makes a decision as to whether the data is the retransmission data (packet) or not from the type information 406 associated with the data 402 (step S502). When a decision is made that the data is not the retransmission data, the processing proceed to step S503, at which the error correction decoder 72 carries out the error correction decoding (channel codec), and the error detector 73 carries out the error detection (step S504).

In contrast, if a decision is made that the data is the retransmission data, the error correction encoder 72 retrieves from the received error data buffer 38 the data with the same sequence number as the sequence number 407 associated with the data 402, and carries out the packet combining (step S505), and error correction encoding (step S506). Furthermore, the error detector 73 performs the error detection (step S504).

When the error detector 73 makes a decision that the error is present as a result of the error detection (CRC result), the processing proceed to step S507, at which the data (receiving soft decision information) and the sequence number 407 associated with the data are stored in the received error data buffer 38. Then, the physical format converter 74 maps the sequence number 407 along with the retransmission request onto the retransmission request field 408 of the radio frame to be transmitted, and carries out the retransmission request (step S508). On the other hand, unless the error is detected at step S504, the data is delivered to the radio communication controller 8. Then, the next block (processing unit) is received at step S509.

Since a decision is made as to whether the received data is the retransmission data in the physical layer according to the data type information 406 as in the foregoing step S502, the retrieval time period can be reduced by searching the received error data buffer only when the decision is made that the data is the retransmission data.

Fig. 6 is a flowchart illustrating an error control procedure at the data transmitting end that receives a retransmission request andcarries out data retransmission. First,the physical format converter 71 makes a decoding decision of the retransmission request information 408 (step S601). If a decision is made that no retransmission request is present, the processing proceed to step S604, at which normal data fed from the upper layer is provided with an error detection code, subjected to the error correction encoding, and mapped onto the physical channel to be transmitted. If a decision is made that the retransmission request is present at step S601, the data, which is stored along with the sequence number matching the sequence number in the retransmission request information 408, is retrieved from the transmission data buffer 37. At the same time, n normal data fed from the upper layer, where n is a predetermined integer equal to or greater than zero, are provided with an error detection code, subjected to the error correction encoding, and mapped onto the physical channel to be transmitted (step S602). Likewise, after n transmit units during which the n data are transmitted, the retrieved data is provided with an error detection code, subj ected to the error correction encoding, and mapped onto the physical channel to be transmitted (step S602) just as the normal transmission data (step S603). Afterward, at step S604, the data to be transmitted next, which is fed from the upper layer, is transmitted. In addition, at step S605, an amount of data stored in the transmission data buffer is detected. Unless available space is present, the processing returns to step S601, and enters into retransmission request waiting mode. If available space is present, the retransmission processing is completed.

Since a decision is made in the physical layer as to whether the retransmission request is present or not according to the retransmission request information 408 as in the foregoing step S601, and the retransmission data is retrieved from the transmission data buffer on the physical layer and is retransmitted, it is possible to reduce the communication time period with the upper layer and the processing time period in the upper layer, thereby being able to reduce the retransmission processing time.

In addition, the algorithm that transmits the requested retransmission data after the n transmit units after receiving the retransmission request as in step S603 enables the data receiving end to receive the synchronized retransmission data, even if a plurality of data transmitting ends transmit retransmission data because the radio communication terminal 3 is carrying out a soft handover.

As described above, the present embodiment in accordance with the present invention is configured such that it carries out the error correction encoding and automatic repeat request on the physical layer. Accordingly, it can reduce the communication time period to the upper layer and the processing time period in the upper layer, thereby being able to perform quick error control. The reducible processing time period varies depending on the communication system and the units included therein. For example, assume a communication system that takes time of about 40 ms for each of the transmitting and receiving between the radio access network controller 1 and base station 2, 20 ms for each of the transmitting and receiving processing in the physical layer in the base station 2, 20 ms for each of the transmitting and receiving processing in the physical layer in the radio communication terminal 3, and 20 ms for each of the transmitting and receiving between the physical layer and upper layer (including the retransmission processing time in the upper layer). As for the conventional technique that carries out the retransmission control in the upper layer, it takes 80 ms from receiving the data at the radio communication terminal 3 to the retransmission request following the error detection, and 120 ms from detecting the retransmission request by the base station 2 and the radio access network controller 1 to the retransmission processing of the data. Thus, the radio communication terminal 3 takes the total time period (retransmission delay time) of about 200 ms from receiving the data to receiving the retransmission data. In contrast with this, the communication system in accordance with the present invention can obviate the need for transmitting and receiving data between the physical layer and upper layer in the radio communication terminal 3 and between the base station 2 and radio access network controller 1 to carry out the retransmission control. Accordingly, the retransmission delay time is about 80 ms, thereby being able to reduce the time to less than half that of the conventional system. This offers an advantage of being able to reduce the processing load of the entire communication network.

In addition, the receiving characteristics can be further improved by linking the error correction encoding with the automatic repeat request, and by packet combining the retransmission data with the soft decision information of the error-detected data, followed by decoding. In this case, the error-detected data must be stored in the received error data buffer until the retransmission data is received (until the packet combining), and the capacity of the buffer is proportional to the retransmission delay time. As a result, the present embodiment can reduce the capacity of the buffer to less than half that of the conventional system.

## Claims

1. A data error control method of data passing through error correction encoding, said data error control method comprising:
a receiving step of receiving from a data transmitting end a radio frame including fields for storing said data, a data number associated with said data and a retransmission request data number;
an extracting step of extracting said data and said data number from said fields of said radio frame received;
a transmitting step of transmitting, if an error is detected as a result of decoding said data extracted, a radio frame to said data transmitting end after storing the data number associated with said data into the field of said radio frame as the retransmission request data number; and
a re-receiving step of receiving retransmission data associated with said data number from said data transmitting end.

2. The data error control method according to claim 1, further comprising:
a storing step of storing, if an error is detected as a result of decoding said data extracted, the data into a receiving buffer along with the data number associated with said data;
a retrieving step of retrieving the data stored along with a same data number as said data number from said receiving buffer according to the data number associated with the retransmission data received in said re-receiving step; and
a combining step of combining the retrieved data with said retransmission data.

3. The data error control method according to claim 2, wherein
said radio frame further includes a field for storing retransmission information associated with said data; and
said retrieving step carries out the retrieval only when a decision is made from said retransmission information that said data is the retransmission data.

4. The data error control method according to claim 1, wherein said data number is stored and transmitted in a radio frame a prescribed number of frames previous to the radio frame storing said data associated with the data number.

5. The data error control method according to claim 1, wherein one of said data number and said retransmission request data number is subjected to error correction encoding.

6. The data error control method according to claim 1, wherein one of said data number and said retransmission request data number is provided with an error detection code.

7. The data error control method according to claim 1, wherein said data number is uniquely assigned to data of each error correction encoding unit of the data.

8. A data error control method of data passing through error correction encoding, said data error control method comprising:
a storing step of storing data to be transmitted into a transmission buffer along with a data number associated with said data;
a transmitting step of storing said data and said data number into a radio frame including fields for storing said data, the data number associated with said data and a retransmission request data number, and of transmitting said radio frame to a data receiving end;
an extracting step of extracting said retransmission request data number from said fields of said radio frame received from said data receiving end; and
a retransmission step of retrieving data, which is stored along with a same data number as said retransmission request data number, from said transmission buffer according to said retransmission request data number, and of retransmitting the data retrieved.

9. The data error control method according to claim 8, wherein the data to be retransmitted at said retransmission step is stored and transmitted in a radio frame a prescribed number of frames after the radio frame storing said retransmission request data number.

10. The data error control method according to claim 8, wherein one of said data number and said retransmission request data number is subjected to error correction encoding.

11. The data error control method according to claim 8, wherein one of said data number and said retransmission request data number is provided with an error detection code.

12. The data error control method according to claim 8, wherein said data number is uniquely assigned to data of each error correction encoding unit of the data.
